# EUROPÄISCHE PATENTSCHRIFT

(11) **EP 1 262 772 B1**
(45) Veröffentlichungstag und Bekanntmachung des Hinweises auf die Patenterteilung: **30.11.2005**
(21) Anmeldenummer: 02011321.3
(22) Anmeldetag: 23.05.2002
(51) Int. Cl.: G01N 30/16, G01N 30/30

(54) **Temperaturgesteuerter Injektor für ein chemisches Analysegerät**
Temperature-controlled injector for chemical analyser
Injecteur à commande par température pour dispositif d'analyse

(30) Priorität: 30.05.2001 DE 10126231; 23.06.2001 DE 10130382
(43) Veröffentlichungstag der Anmeldung: 04.12.2002
(73) Patentinhaber: Gerstel Systemtechnik GmbH & Co. KG, 45473 Mühlheim an der Ruhr (DE)
(72) Erfinder: Bremer, Ralf, 46117 Oberhausen (DE); Rose, Bernhard, 40627 Düsseldorf (DE)
(74) Vertreter: Sparing Röhl Henseler Patentanwälte European Patent Attorneys

(56) Entgegenhaltungen:
- DE-A- 19 810 109
- DE-A- 19 817 017
- US-A- 4 766 760
- US-A- 5 778 681
- KLEMP M ET AL: "SAMPLE DECOMPOSITION IN AN ELECTRICALLY HEATED COLD-TRAP INLET SYSTEM FOR HIGH SPEED GAS CHROMATOGRAPHY" BAKER OIL TOOLS, XX, XX, 1989, Seiten 235-240, XP000319007
- SPRINGSTON S R: "CRYOGENIC-FOCUSING, OHMICALLY HEATED ON-COLUMN TRAP FOR CAPILLARY GAS CHROMATOGRAPHY" JOURNAL OF CHROMATOGRAPHY, ELSEVIER SCIENCE PUBLISHERS B.V. AMSTERDAM, NL, Bd. 517, Nr. 26, 1. September 1990 (1990-09-01), Seiten 67-75, XP000163020 ISSN: 0021-9673

## Beschreibung

Die Erfindung betrifft einen temperaturgesteuerten Injektor für ein chemisches Analysegerät nach dem Oberbegriff des Anspruchs 1.

Ein derartiger Injektor für ein chemisches Analysegerät wie einen Gaschromatographen, der mittels einer Heizeinrichtung entsprechend einem vorbestimmten Temperaturprofil beheizbar und mittels einer die Heizeinrichtung konzentrisch umgebenden Kühleinrichtung kühlbar ist, ist aus DE 198 10 109 C2 bekannt. Hierbei ist die Kühleinrichtung als Kühlschlange ausgebildet, die auf einem Mantel angeordnet ist, in das ein Injektorrohr mit der Heizeinrichtung etwa in Form einer Heizpatrone etwa entsprechend DE 198 17 017 C2 einsteckbar ist. Abgesehen davon, daß sich bei dieser Konstruktion ein beträchtlicher Montageaufwand ergibt, sind auch die Zykluszeiten des Gaschromatographen entsprechend durch die erforderlichen Kühl- und Aufheizzyklen begrenzt.

Ein temperaturgesteuerter Injektor ist aber auch im Zusammenhang mit einer Thermodesorptionseinrichtung, wie sie beispielsweise in DE 196 53 406 C1 beschrieben ist, oder im Zusammenhang mit einer einen Sammler aufnehmenden Desorptionseinrichtung verwendbar, wie sie in DE 199 13 809 A1 beschrieben ist.

Aufgabe der Erfindung ist es, einen temperaturgesteuerten Injektor nach dem Oberbegriff des Anspruchs 1 zu schaffen, der in seiner Bauweise vereinfacht ist und höhere Zykluszeiten des Gaschromatographen ermöglicht.

Diese Aufgabe wird entsprechend dem kennzeichnenden Teil des Anspruchs 1 gelöst.

Ein derartiger Injektor, bei dem die Kühlschlange gleichzeitig als Widerstandsheizungsschlange ausgebildet ist, ermöglicht schnelle Zykluszeiten durch schnelles Aufheizen und schnelles Kühlen, so daß sich ein erweitertes Anwendungsspektrum insbesondere in der Gaschromatographie ergibt. Durch schnelles Aufheizen wird eine Vortrennung im Injektor praktisch unterdrückt. Beim Umschalten von Kühlung auf Heizung wird das in der Rohrschlange enthaltene flüssige Kühlmittel schnell erwärmt und gegebenenfalls verdampft.

Die als Kühlschlange und Widerstandsheizung dienende Rohrschlange hat die zum schnellen Aufheizen des Injektorrohrs einen ausreichenden elektrischen Widerstand zu besitzen, d.h. ihr Widerstand darf nicht so klein sein, daß die Stromstärke soweit ansteigt, daß sie nicht mit einem handelsüblichen Transformator geliefert werden kann. Dementsprechend solite hierdurch die Stromstärke vorzugsweise auf etwa 50 A, insbesondere etwa 15 A, begrenzt sein.

Der Injektor läßt sich u.a. für Kaltaufgabe-, Thermodesorptionssysteme, Fallen von Gaschromatographen, aber auch bei Aufgabesystemen für Analysegeräte wie Massenspektrometer ohne zwischengeschalteten Gaschromatographen verwenden.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt im Schnitt eine Ausführungsform eines temperaturgesteuerten Injektors.
Fig. 2 und 3 zeigen zwei Alternativen von Kühlschlangenwicklungen für den Injektor von Fig. 1.
Fig. 4 und 5 zeigen eine Rohrschlange für den Injektor von Fig. 1 mit einer Ausführungsform ihrer elektrischen Anschlüsse.
Fig. 6 zeigt eine Rohrschlange für den Injektor von Fig. 1 mit einer weiteren Ausführungsform ihrer elektrischen Anschlüsse.

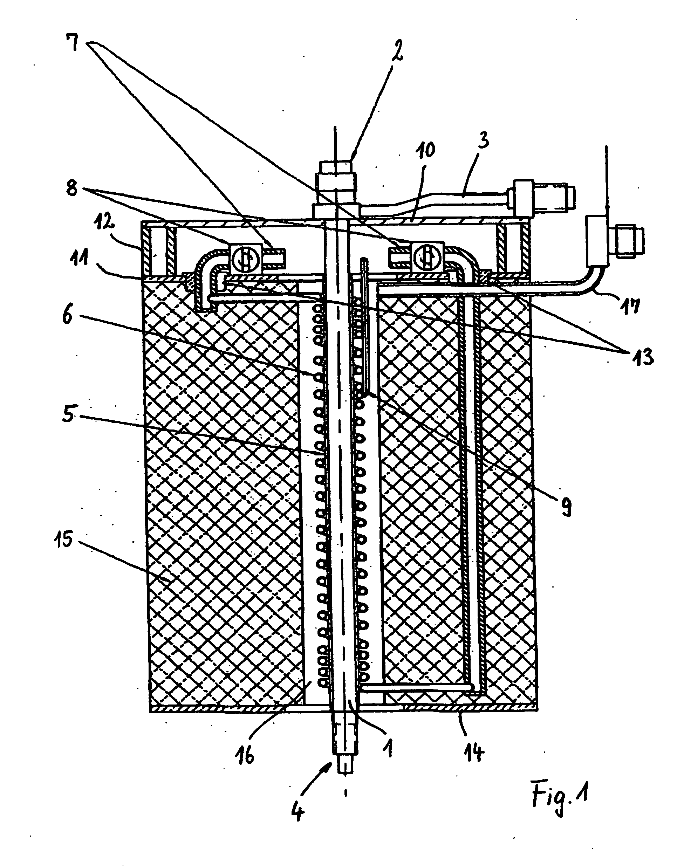

Der in Fig. 1 dargestellte Injektor umfaßt ein Injektorrohr 1 mit einem Kopfstück 2, das mit einem Trägergasanschluß 3 versehen ist. Das Injektorrohr 1 besitzt an dem dem Kopfstück 2 abgewandten Ende einen Anschluß 4 zur Verbindung mit einer Kapillarsäule eines Gaschromatographen.

Das Injektorrohr 1 dient beispielsweise bei einer Kaltaufgabevorrichtung für einen Gaschromatographen zur Aufnahme eines Probenaufgaberohrs, das mit einem Liner versehen ist, um in das Probenaufgaberohr beispielsweise mit einer Injektionsnadel aufgegebene, zu untersuchenden Substanzen im gekühlten Zustand zu adsorbieren und dann durch Aufheizen des Probenaufgaberohrs in einen Trägergasstrom, etwa in einen Stickstoffstrom, freizusetzen und mit Split oder splitlos der Kapillarsäule zuzuführen.

Das Injektorrohr 1 steckt mit Paßsitz in einem metallischen Aufnahmerohr 5, das auf seiner Außenseite mit einer elektrisch isolierenden Oxidschicht versehen ist. Hierbei handelt es sich vorzugsweise um ein Rohr aus einer Aluminiumlegierung mit einer außenseitigen Harteloxierung.

Anstelle eines Metallrohrs als Aufnahmerohr 5 läßt sich auch ein Rohr aus einem anderem, gut wärmeleitfähigen Material verwenden, daß elektrisch isolierend ist, beispielsweise ein entsprechendes Keramikmaterial.

Auf dem Aufnahmerohr 5 sitzt eine Rohrschlange 6. Die Rohrschlange 6 besteht aus einem sehr dünnwandigen Rohr mit geringem Durchmesser. Die Rohrschlange 6 besteht beispielsweise aus einem Edelstahlrohr mit einem Durchmesser von etwa 0,8 bis 3 mm, beispielsweise 1,3 mm, und einer Wandstärke im Bereich eines Bruchteils eines Millimeters, beispielsweise von 0,1 mm.

Die Enden der Rohrschlange 6 sind mit aus Rohrstücken gebildeten Kühlmittelanschlüssen 7 verbunden, die einen größeren Durchmesser im Bereich von mehreren Millimetern haben und aus einem gut leitenden Metall wie Kupfer od.dgl. bestehen. Die Kühlmittelanschlüsse 7, die beispielsweise über entsprechende Schläuche mit einer Kühlmittelquelle eines Kühlmittelkreislaufs verbunden sind, tragen Elektroanschlußstücke 8.

Bei der Kühlmittelquelle kann es sich je nach Anwendungszweck um ein Reservoir für flüssiges Kühlmittel wie Wasser oder Kühlmittelöl handeln, das beispielsweise mittels eines Peltierelements oder eines durch ein Gebläse gekühlten Kondensors bei Verwendung der Rohrschlange 6 als Verdampfer gekühlt und mittels einer Pumpe in Umlauf gebracht wird. Über eine derartige Kryostatkühlung ist eine Temperatur von etwa -70°C erreichbar.

Durch den metallischen Kontakt zwischen der Rohrschlange 6 und dem Aufnahmerohr 5 sowie zwischen diesem und dem Injektorrohr 1 ergibt sich effektive Kühlung des letzteren.

Die Elektroanschlußstücke 8 sind mit einer Stromquelle verbindbar, so daß über die Kühlmittelanschlüsse 7 ein Strom durch die Rohrschlange 6 fließen kann, d.h. daß die Rohrschlange 6 zugleich eine Widerstandsheizung bildet. Zu diesem Zweck benötigt man die geringe Wandstärke des für die Rohrschlange verwendeten Rohrs und einen genügenden spezifischen Widerstand des für das Rohr verwendeten Materials derart, daß eine Leistung > 100 Watt, vorzugsweise > 120 Watt, insbesondere bei einer Spannung < 40 V, insbesondere bei einer Spannung < 24 V, geliefert wird. Deshalb eignet sich als Material beispielsweise Edelstahl, Inconel od.dgl., während Kupfer oder Silber eine zu hohe Leitfähigkeit hätten.

Wenn Spannungen < 40 V verwendet werden, fällt der Injektor unter die Kleinspannungsrichtlinie, wodurch sich der Schaltungsaufwand entsprechend verringert und keine Erdung erforderlich ist. Dies gilt erst recht bei Verwendung einer Spannung ≤ 24 V.

Im Bereich der Rohrschlange 6 ist ein Thermofühler 9 vorgesehen, über den die Widerstandsheizung entsprechend einem vorgesehenen Aufheizprofil durch eine nicht dargestellte Steuerung steuerbar ist.

Das Kopfstück 2 ist an einer Platte 10 befestigt, die zu einer weiteren, hierzu parallelen, eine mittlere Durchtrittsöffnung aufweisenden Platte 11 angeordnet ist, wobei beiden Platten 10, 11 durch Abstandshalter 12 voneinander getrennt sind. In den Zwischenbereich zwischen den beiden Platten 10, 11 münden abgewinkelte Enden der Kühlmittelanschlüsse 7, die über Isolierbuchsen 13 beispielsweise aus harteloxiertem Aluminium durch die Platte 11 geführt sind, und tragen dort die Elektroanschlußstücke 8.

Die Elektroanschlußstücke 8 können Schellen sein, an denen entsprechende Anschlußdrähte (nicht dargestellt) befestigt sind.

Die Anschlußdrähte können auch direkt an den Kühlmittelanschlüssen 7 angelötet sein. Es können auch Keramikleistenklemmen verwendet werden, um die Anschlußdrähte mit den Kühlmittelanschlüssen 7 elektrisch zu verbinden.

Mit Abstand zur Platte 11 befindet sich eine weitere, eine mittlere Durchtrittsöffnung aufweisende Platte 14 im Bereich des Anschlusses 4, wobei ein Isolierblock 15 aus Wärmeisoliermaterial zwischen den Platten 11 und 14 angeordnet ist. Die Enden der Rohrschlange 6 und die entsprechende Abschnitte der Kühlmittelanschlüsse 7 sind in dem Isolierblock 15 eingebettet.

Verflüssigtes Gas wie Stickstoff oder Kohlendioxid, mit denen tiefere Temperaturen als mit Kryostatkühlung erreichbar sind, lassen sich aufgrund des hohen Widerstandes nicht durch die Rohrschlange 6 transportieren. Wenn daher tiefere Temperaturen erreicht werden sollen, kann dies dadurch erzielt werden, daß man den zwischen Isolierblock 15 und dem Aufnahmerohr 5 mit der darauf angeordneten Rohrschlange 6 befindlichen Zwischenraum 16 über entsprechende Anschlüsse 17 (einer dargestellt) mit verflüssigtem Gas durchströmen läßt.

Die Rohrschlange 6 wird zweckmäßigerweise zunächst auf einem Dorn vorgeformt, dessen Durchmesser etwa geringer als derjenige des Aufnahmerohrs 5 ist, so daß die Rohrschlange 6 eine Passung für das Aufnahmerohr 5 aufweist.

Die Rohrschlange 6 kann an beiden Enden enger als im mittleren Bereich gewickelt sein, um eine möglichst gleichmäßige Temperaturverteilung zu erzielen.

Bei dem Aufnahmerohr 5 kann es sich auch um eines handeln, das außenumfänglich mit einer Nut zum Einlegen der Rohrschlange 6 versehen ist.

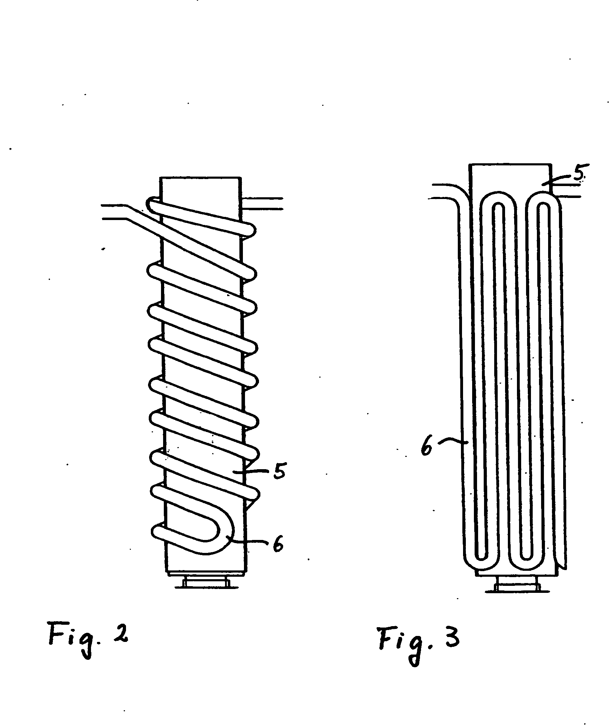

Die Rohrschlange 6 kann auch, wie in Fig. 2 bzw. 3 dargestellt bifilar oder mäanderartig gewickelt sein, wodurch erreicht wird, daß sich ihre Eintritts- und Austrittsenden in einem benachbarten Bereich befinden.

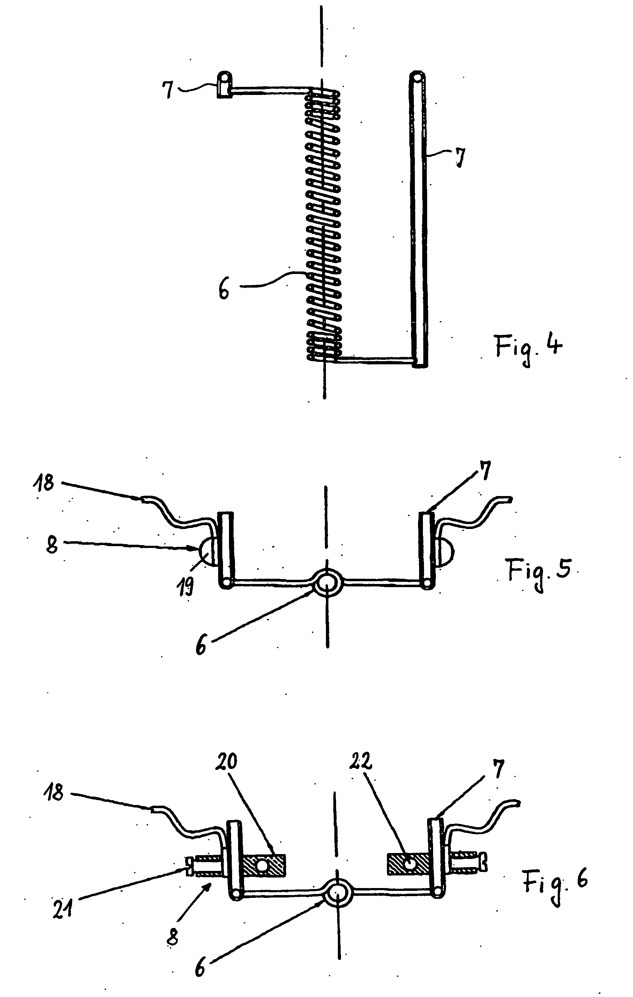

In Fig. 4 zeigt die Rohrschlange 6 mit ihren Kühlmittelanschlüssen 7 in Seitenansicht, während Fig. 5 von Draufsicht von Fig. 4 mit den zugehörigen Elektroanschlußstücken 8 zeigt. Hierbei ist ein Ende eines elektrischen Anschlußkabels 18 über einen Lötpunkt 19 mit dem Kupferrohr des jeweiligen Kühlmittelanschlusses 7 durch Hartlöten verbunden.

Bei der in Fig. 6 dargestellten Ausführungsform ist dagegen auf dem entsprechenden Kupferrohr des jeweiligen Kühlmittelanschlusses 7 eine Elektroanschlußklemme 20 etwa aus Keramik angeordnet, die eine Klemmschraube 21 aufnimmt, die einen Endabschnitt des Anschlußkabels 18 gegen das Kupferrohr und damit auch die mit wenigstens einem Montageloch 22 versehene Elektroanschlußklemme 20 daran klemmt.

## Patentansprüche

1. Temperaturgesteuerter Injektor für ein chemisches Analysegerät, insbesondere einen Gaschromatographen, umfassend ein von einem Aufnahmerohr (5) aufnehmbares Injektorrohr (1) mit einer das Aufnahmerohr (5) umgebenden, von Kühlmittel durchströmbaren und Kühlmittelanschlüsse (7) aufweisenden, als metallische Rohrschlange (6) ausgebildeten Kühlung und eine Widerstandsheizung für das Injektorrohr (1), **dadurch gekennzeichnet, daß** das Aufnahmerohr (5) aus einem gut wärmeleitfähigen Material besteht, nach außen elektrisch isolierend ist und die Rohrschlange (6) auf dem Aufnahmerohr (5) sitzt, einen zum schnellen Aufheizen des Injektorrohrs (1) ausreichenden elektrischen Widerstand besitzt und über Elektroanschlußstücke (8) strombeaufschlagbar ist.

2. Injektor nach Anspruch 1, **dadurch gekennzeichnet, daß** das Aufnahmerohr (5) ein Metallrohr ist und außenseitig eine elektrisch isolierende Oxidschicht aufweist.

3. Injektor nach Anspruch 1 oder 2, **dadurch gekennzeichnet, daß** das Aufnahmerohr (5) ein eloxiertes Rohr aus einer Aluminiumlegierung ist.

4. Injektor nach einem der Ansprüche 1 bis 3, **dadurch gekennzeichnet, daß** die Rohrschlange (6) eine Passung für das Aufnahmerohr besitzt.

5. Injektor nach einem der Ansprüche 1 bis 4, **dadurch gekennzeichnet, daß** die Rohrschlange (6) eine Leistung > 100 Watt bei einer Spannung < 40 V liefert.

6. Injektor nach einem der Ansprüche 1 bis 5, **dadurch gekennzeichnet, daß** die Rohrschlange (6) ein Edelstahlrohr mit einem Durchmesser im Bereich von etwa 0,8 bis 3 mm ist.

7. Injektor nach einem der Ansprüche 1 bis 6, **dadurch gekennzeichnet, daß** die Rohrschlange (6) ein Edelstahlrohr mit einer Wandstärke von einem Bruchteil eines Millimeters ist.

8. Injektor nach einem der Ansprüche 1 bis 7, **dadurch gekennzeichnet, daß** die Kühlmittelanschlußstücke (7) Rohrstücke aus einem gut leitenden Metall sind, die Elektroanschlußklemmen (20) tragen.

9. Injektor nach einem der Ansprüche 1 bis 8, **dadurch gekennzeichnet, daß** das Injektorrohr (1) in dem die Rohrschlange (6) tragenden Abschnitt von einem Wärmeisolierblock (15) umgeben ist.

10. Injektor nach Anspruch 9, **dadurch gekennzeichnet, daß** zwischen der Rohrschlange (6) und dem Wärmeisolierblock (15) ein kühlmitteldurchströmbarer Zwischenraum (16) vorgesehen ist.

11. Injektor nach einem der Ansprüche 1 bis 10, **dadurch gekennzeichnet, daß** die Rohrschlange (6) bifilar oder mäanderartig gewickelt ist.

12. Injektor nach einem der Ansprüche 1-7, 9-11 **dadurch gekennzeichnet, daß** elektrische Anschlußkabel (18) an die Kühlmittelanschlüsse (7) angelötet sind.

13. Injektor nach einem der Ansprüche 1 bis 11, **dadurch gekennzeichnet, daß** elektrische Anschlußkabel (18) an die Kühlmittelanschlüsse (7) über Elektroanschlußklemmen (20) angeklemmt sind.

## Claims

1. Temperature-controlled injector for a chemical analysis unit, in particular a gas chromatograph, comprising an injector tube (1), which can be received by a receiving tube (5), having a cooling system, which surrounds the receiving tube (5), through which coolant can flow, which has coolant connections (7) and which is designed as a metallic tube coil (6), and a resistance heating system for the injector tube (1), **characterized in that** the receiving tube (5) consists of a material of good thermal conductivity, is electrically insulating towards the outside, and the tube coil (6) rests on the receiving tube (5), has an electrical resistance which is sufficient to rapidly heat the injector tube (1) and can be acted on by current via electrical connection pieces (8).

2. Injector according to Claim 1, **characterized in that** the receiving tube (5) is a metal tube and on the outer side has an electrically insulating oxide layer.

3. Injector according to Claim 1 or 2, **characterized in that** the receiving tube (5) is an anodized tube made from an aluminium alloy.

4. Injector according to one of Claims 1 to 3, **characterized in that** the tube coil (6) fits to the receiving tube.

5. Injector according to one of Claims 1 to 4, **characterized in that** the tube coil (6) supplies an output of > 100 Watts at a voltage of < 40 V.

6. Injector according to one of Claims 1 to 5, **characterized in that** the tube coil (6) is a stainless steel tube with a diameter in the range from approximately 0.8 to 3 mm.

7. Injector according to one of Claims 1 to 6, **characterized in that** the tube coil (6) is a stainless-steel tube with a wall thickness of a fraction of a millimetre.

8. Injector according to one of Claims 1 to 7, **characterized in that** the coolant connection pieces (7) are pieces of tube made from a metal of good conductivity which bear electrical connection terminals (20).

9. Injector according to one of Claims 1 to 8, **characterized in that** the injector tube (1) is surrounded by a heat-insulating block (15) in the section which bears the tube coil (6).

10. Injector according to Claim 9, **characterized in that** an interspace (16), through which coolant can flow, is provided between the tube coil (6) and the heat-insulating block (15).

11. Injector according to one of Claims 1 to 10, **characterized in that** the tube coil (6) is wound in bifilar or meandering form.

12. Injector according to one of Claims 1 to 7, 9 to 11, **characterized in that** electrical connection cables (18) are soldered to the coolant connections (7).

13. Injector according to one of Claims 1 to 11, **characterized in that** electrical connection cables (18) are clamped to the coolant connections (7) by means of electrical connection terminals (20).

## Revendications

1. Injecteur commandé par la température pour un appareil d'analyse chimique, en particulier un chromatographe en phase gazeuse, comprenant un tube d'injecteur (1) logé par un tube récepteur (5), comportant un refroidissement et un chauffage par résistance du tube d'injecteur (1) conçu sous la forme d'un serpentin métallique (6) entourant le tube récepteur (5), pouvant être parcouru par le réfrigérant et présentant des connexions du réfrigérant (7), **caractérisé en ce que** le tube récepteur (5) est constitué d'un matériau qui est un bon thermoconducteur, est électro-isolant par rapport à l'extérieur, et **en ce que** le serpentin (6) est placé sur le tube récepteur (5), présente une résistance électrique suffisante pour un chauffage rapide du tube d'injecteur (1), et peut être alimenté en courant par l'intermédiaire d'éléments de connexion électrique (8).

2. Injecteur selon la revendication 1, **caractérisé en ce que** le tube récepteur (5) est un tube métallique et présente, sur la face extérieure, une couche d'oxyde électro-isolante.

3. Injecteur selon la revendication 1 ou 2, **caractérisé en ce que** le tube récepteur (5) est un tube anodisé constitué d'un alliage d'aluminium.

4. Injecteur selon une des revendications 1 à 3, **caractérisé en ce que** le serpentin (6) présente un ajustement pour le tube récepteur.

5. Injecteur selon une des revendications 1 à 4, **caractérisé en ce que** le serpentin (6) délivre une puissance > 100 watts à une tension < 40 V.

6. Injecteur selon une des revendications 1 à 5, **caractérisé en ce que** le serpentin (6) est un tube en acier spécial présentant un diamètre de l'ordre d'environ 0,8 à 3 mm.

7. Injecteur selon une des revendications 1 à 6, **caractérisé en ce que** le serpentin (6) est un tube en acier spécial présentant une épaisseur de paroi d'une fraction de millimètre.

8. Injecteur selon une des revendications 1 à 7, **caractérisé en ce que** les éléments de connexion du réfrigérant (7) sont des éléments tubulaires constitués d'un métal bon conducteur, qui portent des bornes de connexion électrique (20).

9. Injecteur selon une des revendications 1 à 8, **caractérisé en ce que** le tube d'injecteur (1) est entouré par un bloc d'isolation thermique (15) dans la section supportant le serpentin (6).

10. Injecteur selon la revendication 9, **caractérisé en ce qu'**un espace intermédiaire (16) pouvant être parcouru par le réfrigérant est prévu entre le serpentin (6) et le bloc d'isolation thermique (15).

11. Injecteur selon une des revendications 1 à 10, **caractérisé en ce que** le serpentin (6) est enroulé en bifilaire ou en méandres.

12. Injecteur selon une des revendications 1 à 7, 9 à 11, **caractérisé en ce que** des câbles de connexion électrique (18) sont soudés aux connexions du réfrigérant (7).

13. Injecteur selon une des revendications 1 à 11, **caractérisé en ce que** des câbles de connexion électrique (18) sont connectés aux connexions du réfrigérant (7) par l'intermédiaire de bornes de connexion électrique (20).
